# FASCICULE DE BREVET EUROPEEN

(11) **EP 3 651 971 B1**
(45) Date de publication et mention de la délivrance du brevet: **05.05.2021**
(21) Numéro de dépôt: 18735342.0
(22) Date de dépôt: 09.07.2018
(51) Int. Cl.: B29C 49/48, B29C 49/78, B29C 49/06, B29C 49/36

(54) **PROCEDE D'ASSISTANCE A LA PROGRAMMATION D'UNE UNITE ELECTRONIQUE DE COMMANDE D'UNE STATION DE FORMAGE**
VERFAHREN ZUR UNTERSTÜTZUNG DER PROGRAMMIERUNG EINER ELEKTRONISCHEN STEUEREINHEIT EINER FORMSTATION
METHOD FOR ASSISTING IN THE PROGRAMMING OF AN ELECTRONIC CONTROL UNIT OF A FORMING STATION

(30) Priorité: 10.07.2017 FR 1756503
(43) Date de publication de la demande: 20.05.2020
(73) Titulaire: Sidel Participations, 76930 Octeville-sur-Mer (FR)
(72) Inventeur: AUGER, Julien, 76930 Octeville sur Mer (FR)
(74) Mandataire: Sidel Group
(86) Numéro de dépôt international: PCT/EP2018/068558
(87) Numéro de publication internationale: WO 2019/011865

(56) Documents cités:
- EP-A2- 2 236 268
- WO-A1-2012/052836
- US-A1- 2015 145 179

## Description

### DOMAINE TECHNIQUE DE L'INVENTION

L'invention concerne un procédé d'assistance à la programmation d'une unité électronique de commande d'une station de formage comportant des unités de moulage dont chacune porte un moule interchangeable pour réaliser des récipients, notamment pour des bouteilles en matériau thermoplastique, par soufflage de préformes.

### ARRIERE PLAN TECHNIQUE DE L'INVENTION

Dans le domaine de la fabrication de récipients en matériau thermoplastique, il est connu d'obtenir le récipient final par formage, notamment par soufflage, de préformes chaude. Pour obtenir des récipients présentant des caractéristiques adaptées à la nature du produit qu'ils doivent contenir, le procédé de formage est différent pour chaque type de récipient.

Par exemple, la fabrication par formage de récipients destinées à recevoir de l'eau froide nécessite l'utilisation de moules refroidis qui permettent d'obtenir de manière peu onéreuse et rapide leur forme définitive.

En revanche un tel procédé n'est pas applicable lorsque le récipient doit être rempli avec un liquide chaud. En effet, les parois d'un récipient réalisé selon un tel procédé se rétractent lorsqu'elles sont chauffées par le liquide. Pour éviter cet inconvénient, il est nécessaire de maintenir les moules à une température déterminée qui est supérieure à la température ambiante pendant le procédé de formage.

De même, certains procédés de fabrication de récipients présentant une paroi de très faible épaisseur nécessitent de déplacer le fond du moule pendant l'opération de formage pour obtenir un fond suffisamment fin par étirement du matériau thermoplastique.

Encore bien d'autres procédés de fabrication sont aussi connus pour fabriquer des récipients adaptés en fonction de la nature du liquide à recevoir. Chacun de ces procédés requiert un moule adapté et une machine susceptible de mettre en oeuvre ce moule. En outre, chaque procédé requiert de sélectionner de nombreux paramètres de fonctionnement qui sont généralement choisis ou tout au moins supervisés par un opérateur humain.

Par ailleurs, les installations de fabrication de récipients, notamment de bouteilles en matériau thermoplastique, ont un coût financier très importants. Les fabricants de récipients sont donc demandeurs d'une installation polyvalente permettant de réaliser de nombreux types de récipients.

Cependant, une telle installation polyvalente est extrêmement complexe à programmer. De nombreux paramètres doivent être sélectionnés ou contrôlés par un opérateur humain.

Pour limiter les erreurs humaines, on a déjà proposé d'appliquer des recettes prédéterminées en fonction du type de récipient à fabriquer. Cependant, cette solution n'est pas entièrement satisfaisante car elle ne permet pas de régler finement les paramètres de fonctionnement. En outre, cette solution ne permet pas de s'affranchir d'erreurs telles que l'oubli d'un moule destiné à un autre type de récipients sur la station de formage, notamment par soufflage ou étirage-soufflage.

En outre, cette solution fait généralement intervenir une base de données complexe, qui est souvent délocalisée, pour permettre de calculer les paramètres de fonctionnement de la machine. Cependant, une telle base de données est coûteuse. De plus, une telle base de données est complexe à mettre à jour en fonction des évolutions et perfectionnement technologiques qui apparaissent régulièrement.

Par ailleurs, il est connu d'équipé les moules de support d'information comme dans le document WO2012052836 qui décrit un appareil de fabrication d'un récipient obtenu par soufflage à partir d'une préforme comprenant des moyens d'identification disposés sur le moule pour identifier le type de récipient final et des moyens de commande pour commander l'ouverture du moule quand la valeur de la pression finale de formage régnant à l'intérieur du récipient final est atteinte.

De plus, le document EP2236268 décrit un support d'information disposé sur le moule tel qu'une antenne RFID, un code barre, déterminant une propriété géométrique du récipient final, ainsi qu'un dispositif de capteur pour détecter une valeur caractéristique de la géométrie de la préforme à former.

Le document US2015145179 décrit un système de changement automatique de changement de moule comprenant un bras et un système de chargement agencé sur le support de l'installation de fabrication de récipients.

### BREF RESUME DE L'INVENTION

L'invention propose un procédé d'assistance à la programmation d'une unité électronique de commande d'une station de formage, la station de formage comportant des unités de moulage dont chacune porte un moule interchangeable pour réaliser des récipients, notamment pour des bouteilles en matériau thermoplastique, par soufflage de préformes, le procédé comportant une étape de programmation manuelle consistant à sélectionner une valeur pour des paramètres déterminés de fonctionnement par l'intermédiaire d'une interface de saisie de données dans l'unité électronique de commande,
caractérisé en ce que sur chaque moule est fixé un moyen de stockage permanent de données comportant des valeurs compatibles avec ledit moule pour chaque paramètre déterminé, le procédé comportant une étape préalable de lecture des valeurs stockées dans le moyen de stockage par un lecteur qui transmet automatiquement lesdites valeurs à l'unité électronique de commande pour limiter le choix de valeurs de chaque paramètre aux valeurs compatibles.

Ainsi, les erreurs humaines sont limitées. Cette solution est particulièrement simple et peu onéreuse car elle ne requiert pas la présence d'une base de données supplémentaire.

Selon d'autres caractéristiques du procédé d'assistance :
- le moyen de stockage est un élément physique multidimensionnel qui est porté par le moule et qui est susceptible d'être lu par un lecteur optique ;
- le moyen de stockage est un code-barres bidimensionnel qui est porté par le moule et qui est susceptible d'être lu par un lecteur optique ;
- le moyen de stockage est un code conforme à la norme "GS1 DataMatrix ECC200" ;
- le lecteur est agencé sur la station de formage ;
- les valeurs stockées sont lues par le lecteur lorsque le moule est installé sur la station de formage.

L'invention concerne aussi une unité de moulage pour la mise en œuvre du procédé selon les enseignements de l'invention, l'unité de moulage comportant au moins deux coquilles et au moins deux porte-coquilles recevant chacune de manière démontable une des coquilles, chaque coquille présentant :
- une face interne comportant une portion d'une empreinte du récipient,
- une face supérieure présentant un passage débouchant dans l'empreinte du récipient et destiné à laisser passer un col du récipient,
- une face externe destinée à être reçue contre un porte-coquille,
caractérisé en ce que le moyen de stockage barre bidimensionnel) porté par au moins une coquille, ledit code étant agencé sur une face d'une partie visible de la coquille qui dépasse du porte-coquille associé lorsque le porte coquille reçoit ladite coquille.

Cet emplacement réservé pour le code barre bidimensionnel est particulièrement avantageux car il est visible même lorsque la coquille est montée sur l'unité de moulage associée.

Selon d'autres caractéristiques du moule :
- le code barre bidimensionnel est formé par une matrice carré de pixels qui est divisée horizontalement en deux moitiés de carré juxtaposées horizontalement ;
- le code barre bidimensionnel est imprimé sur une étiquette qui est collée sur ladite zone supérieure de la coquille ;
- le code barre bidimensionnel est réalisé par altération de la surface de la coquille ;
- le code barre bidimensionnel est gravé sur la surface du moule.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de dessus qui représente schématiquement une station de formage qui est apte à mettre en œuvre le procédé selon les enseignements de l'invention ;
- la figure 2 est une vue en coupe verticale selon le plan de coupe 2-2 de la figure 1 qui représente une unité de moulage équipée d'un moule réalisé selon les enseignements de l'invention ;
- la figure 3 est une vue en perspective qui représente deux coquilles d'un moule dont l'une est équipée d'un code barre bidimensionnel réalisé selon les enseignements de l'invention ;
- la figure 4 est une vue de côté qui représente une unité de moulage de la station de formage de la figure 1 contenant un récipient dont un col est saisi par une pince de préhension ;
- la figure 5 est une vue de face qui représente un exemple d'un code barre bidimensionnel sous forme de matrice carrée de pixels noirs et blancs ;
- la figure 6 est une vue de face qui représente le code barre bidimensionnel de la figure 5 sous forme d'un rectangle formé de deux moitiés de la matrice juxtaposées horizontalement.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale dirigée d'arrière en avant, verticale dirigée de bas en haut, et transversale dirigée de gauche à droite, indiquées par le trièdre "L,V,T" des figures. L'orientation verticale est utilisée à titre de repère géométrique sans rapport avec la direction de la gravité.

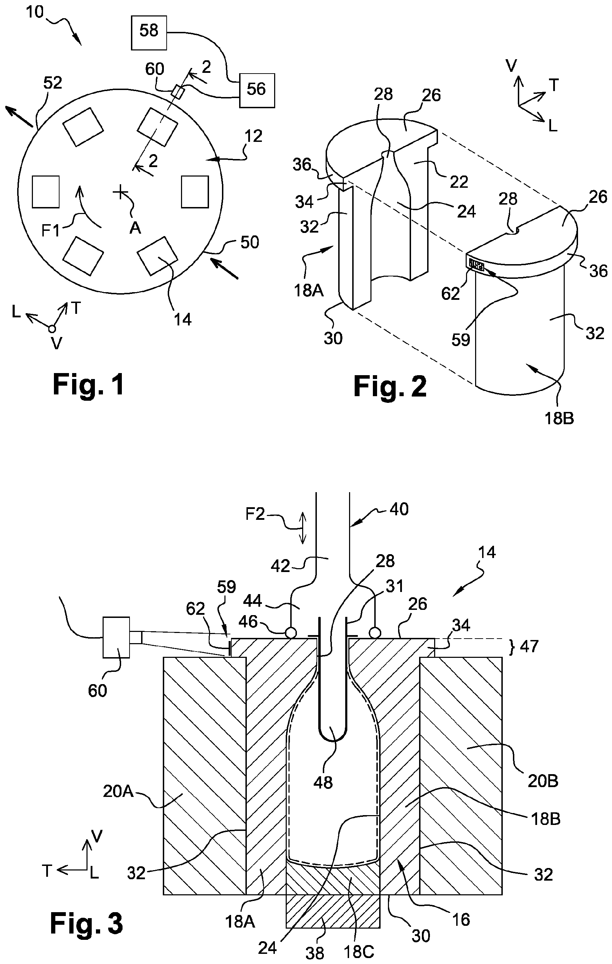

On a représenté schématiquement à la figure 1 une station 10 de formage en série de récipients, notamment de bouteilles, en matériau thermoplastique à partir de préformes. La station 10 de formage est destinée à faire partie d'une installation de fabrication de récipients en grandes séries comportant par exemple une station de conditionnement thermique.

La station 10 de formage comporte un carrousel 12 rotatif autour d'un axe "A" vertical. Le carrousel 12 tourne ici dans un sens horaire comme indiqué par la flèche "F1". Le carrousel 12 porte plusieurs unités 14 de moulage réparties régulièrement à sa périphérie.

Comme cela est représenté à la figure 2, chaque unité 14 de moulage comporte un moule 16. Le moule 16 comporte plusieurs coquilles 18A, 18B de moulage, ici au nombre de deux, qui sont chacune portées par un porte-coquille 20A, 20B.

Les deux coquilles 18A, 18B de moulage ont été représentées plus en détails à la figure 3. Chaque coquille 18A, 18B de moulage présente une forme hémicylindrique d'axe vertical. Chaque coquille 18A, 18B présente notamment une face 22 interne verticale, ici plane, comportant une partie d'une empreinte 24 du récipient à obtenir après formage. Une face 26 supérieure horizontale présente un passage 28 supérieur débouchant dans l'empreinte 24 du récipient et destiné à laisser passer un col 31 du récipient, comme cela est illustré à la figure 2. L'empreinte 24 est ici aussi débouchante dans une face 30 inférieure. Chaque coquille 18A, 18B est en outre délimitée par une face 32 externe verticale, ici de forme hémicylindrique, destinée à être reçue contre le porte-coquille 20A, 20B correspondant.

Les deux coquilles 18A, 18B sont destinées à être jointe par leurs faces 22 internes pour reconstituer l'empreinte 24 de récipient.

Chaque coquille 18A, 18B présente en outre un rebord 34 supérieur qui s'étend radialement en saillie par rapport à la face 32 externe et dans le prolongement de la face 26 supérieure. Le rebord 34 est délimité radialement par une face 36 annulaire verticale.

Comme représenté à la figure 2, les coquilles 18A, 18B sont ici complétées par un fond 18C qui est agencé dans l'orifice débouchant dans la face 30 inférieure. Le fond 18C délimite vers le bas l'empreinte 24 du récipient. Le fond 18C est porté par un support 38.

La coquille 18A, 18B et le fond 18C portent ainsi l'empreinte 24 du récipient tandis que les porte-coquilles 20A, 20B et le support 38 de fond sont équipés de moyens (non représentés) de refroidissement de l'empreinte 24. Il s'agit par exemple d'un circuit de fluide caloporteur.

Chaque coquille 18A, 18B est destinée à être portée de manière amovible par le porte-coquille 20A, 20B correspondant, tandis que les porte-coquilles 20A, 20B sont fixés à des éléments de supports (non représentés) articulés pour permettre la fermeture du moule 16. De cette manière, les coquilles 18A, 18B sont interchangeable sur chaque unité 14 de moulage. Ainsi, lorsqu'on souhaite changer de modèle de récipients, seules les coquilles 18A, 18B et le fond 18C sont changés tandis que les porte-coquilles 20A, 20B, qui sont des éléments très lourds, encombrants et connectés à plusieurs conduites de refroidissement, demeurent en place sur leurs supports. Le changement d'empreinte est ainsi rapide et aisé.

Chaque unité 14 de moulage est en outre munie d'une tuyère 40 de soufflage qui est montée coulissante verticalement par rapport au moule 16, comme indiqué par la flèche "F2" de la figure 3. La tuyère 40 comporte un conduit 42 vertical d'alimentation en air sous pression qui débouche vers le bas dans une cloche 44 qui comporte un bord inférieur équipé d'un joint 46 d'étanchéité. La tuyère 40 est montée à l'aplomb du passage 28 supérieur du moule 16 entre une position haute inactive dans laquelle la cloche 44 est écartée du moule 16 et une position inférieure active dans laquelle la cloche 44 recouvre de manière étanche un col 31 de préforme dépassant par le passage 28 supérieur en prenant appui sur la face 26 supérieure des coquilles 18A, 18B.

Lors de la préparation de la station 10 de formage, les coquilles 18A, 18B présentant une empreinte d'un même modèle de récipient sont tout d'abord montées dans leurs porte-coquilles 20A, 20B. Comme représenté à la figure 2, le rebord 34 supérieur de chaque coquille 18A, 18B permet de positionner ces dernières en prenant appui verticalement sur le porte-coquille 20A, 20B associé. Ainsi, le rebord 34 dépasse au-dessus des porte-coquilles 20A, 20B. En conséquences, une partie 47 des faces de chaque coquille 18A, 18B est visible depuis l'extérieur lorsque ladite coquille 18A, 18B est montée sur son porte-coquille 20A, 20B. La partie 47 visible est ici formée de la face 36 annulaire verticale et de la face 26 supérieure. La face 22 interne de la coquille 18A, 18B ne fait pas partie de la partie 47 visible car elle est recouverte par l'autre coquille en position jointe.

Lors du fonctionnement de la station 10 de formage, des préformes 48 chaudes sont acheminées individuellement jusqu'à un point 50 d'entrée de la station 10 de formage. Les préformes 48 sont réalisées en un matériau thermoplastique tel que du PET (polyéthylène téréphtalate). Chaque préforme 48 est positionnée entre les deux coquilles 18A, 18B d'un moule 16 ouvert correspondant passant par le point 50 d'entrée. Les deux coquilles 18A, 18B sont ensuite fermée de manière que la préforme 48 soit reçue dans l'empreinte 24, un col 31 de la préforme 48 sortant du moule 16 par le passage 28 supérieur. La préforme 48 est maintenue dans cette position par appui d'une collerette entourant le col 31 sur le pourtour du passage 28. Cette opération est réalisée sans interrompre la rotation du carrousel 12.

L'unité 14 de moulage poursuit son trajet circulaire jusqu'à un point 52 de sortie. Pendant le trajet, le récipient est formé par soufflage de la préforme 42 au moyen de la tuyère 40. La préforme 48 est ainsi transformée en un récipient final présentant la même forme que l'empreinte 24. Au point 52 de sortie, le moule 16 est ouvert de manière à extraire le récipient ainsi formé.

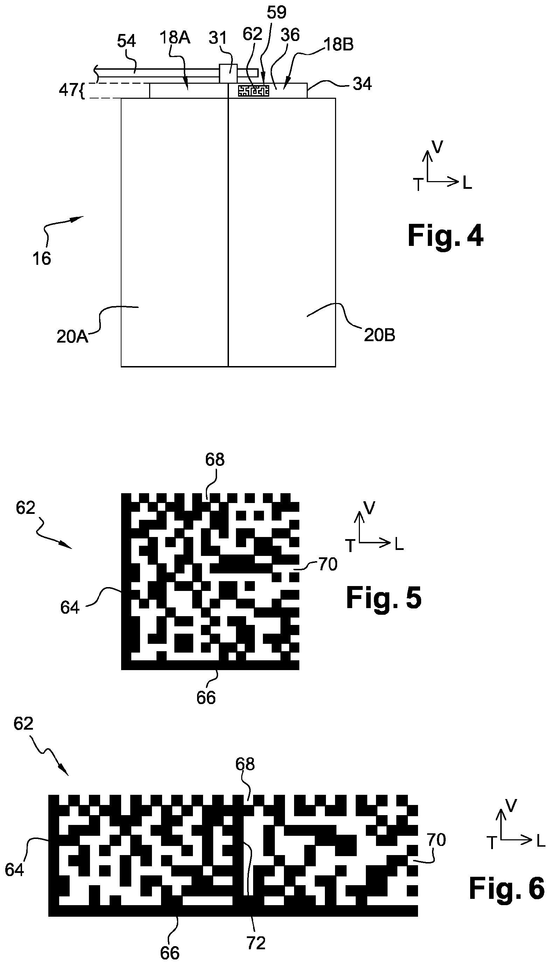

Comme représenté à la figure 4, l'extraction du récipient est réalisée au moyen d'une pince 54 de préhension qui s'étend dans un plan globalement horizontal et qui est destinée à saisir le récipient par son col 31. La pince 54 de préhension passe ainsi juste au-dessus de la face 26 supérieure des coquilles 18A, 18B. Il arrive, en cas de mauvais réglage, que la pince 54 de préhension puisse frotter contre cette face 26 supérieure.

Puis le cycle est reproduit pour chaque unité 14 de moulage. La rotation du carrousel 12 est très rapide, permettant par exemple de réaliser plusieurs milliers de récipients par heure.

Comme expliqué précédemment, il est aisé de changer la forme du récipient à obtenir en remplaçant les coquilles 18A, 18B et le fond 18C. Néanmoins, un tel changement doit être accompagné de modifications de plusieurs paramètres de fonctionnement de la station 10 de formage. Par exemple, selon le volume du récipient à obtenir, la courbe de pression de l'air sous pression injecté dans la préforme 48 par l'intermédiaire de la tuyère 40 sera différente.

Outre le fait de pouvoir changer la forme des récipients finaux en remplaçant les coquilles 18A, 18B à chaque étape de préparation, la station 10 de formage est conçue pour permettre de réaliser divers types récipients selon des procédés de formage déterminés. Chaque type de récipient possède des propriétés structurelles propres qui sont adaptées à la nature du produit que le récipient est destiné à contenir.

On donne par la suite quelques exemples non limitatifs de procédé de formage permettant d'obtenir divers types de récipients.

Selon un exemple d'un premier procédé de formage, pour réaliser un récipient à contenir de l'eau, les coquilles 18A, 18B seront uniquement refroidies par les moyens de refroidissement équipant les porte-coquilles 20A, 20B. En revanche, si le récipient est destiné à être rempli avec un liquide chaud, les récipients obtenus selon ce premier procédé verront leurs parois se rétracter sous l'effet de la chaleur, modifiant ainsi de manière non maîtrisée la forme du récipient.

Selon un exemple d'un deuxième procédé de formage, pour réaliser un récipient adapté à recevoir un liquide chaud, il est nécessaire d'utiliser des coquilles chauffantes, apte à réaliser un procédé dit "HR" ou "Hot Refill". En chauffant les récipients à une température déterminée pendant leur formage, il est en effet possible d'éviter l'effet de rétraction des parois évoqué au paragraphe précédent. Les coquilles adaptées sont ainsi équipées de moyens de chauffage, telle qu'une résistance électrique.

Selon un exemple d'un troisième procédé de formage, pour obtenir des récipients présentant un fond constitué d'une paroi extrêmement fine et résistance, il est connu de monter le fond 18C sur un support 38 coulissant verticalement. Lors du formage du récipient, le fond 18C est ainsi déplacé verticalement vers le haut de manière à étirer la matière constituant le fond du récipient. Ce type de moule est appelé "moule à fond boxé". Ceci permet d'obtenir des récipients légers et peu onéreux.

Bien entendu, en fonction du procédé de formage choisi, de nombreux autres paramètres de fonctionnement de la station 10 de formage doivent encore être réglés.

Pour permettre de piloter la station 10 de formage, cette dernière est équipée d'une unité 56 électronique de commande programmable, comme illustré schématiquement à la figure 1. La station 10 de formage comporte en outre une interface 58, dite interface homme-machine ou HMI (Human Machine Interface). Cette interface 58 est par exemple équipée d'un écran et d'un clavier et/ou d'un écran tactile.

Lors d'une étape de programmation manuelle, un opérateur humain peut sélectionner grâce à l'interface 58 la valeur d'une multitude de paramètres de fonctionnement de la station 10 de formage. L'ensemble des valeurs sélectionnées est appelé "recette". L'opérateur programme ainsi une recette adaptée au type de récipient qu'il souhaite obtenir.

Cependant, il est possible que parmi la multitude de paramètres à gérer, l'opérateur humain ne sélectionne par erreur une valeur qui n'est pas compatible avec le type de coquille 18A, 18B équipant les moules 16. C'est par exemple le cas si les coquilles 18A, 18B ne comportent pas de moyens de chauffage et que l'opérateur décide de choisir de mettre en œuvre un procédé "HR". C'est aussi le cas si l'opérateur choisi une pression de soufflage qui n'est pas adaptée au volume du récipient à obtenir.

Pour résoudre ce problème, l'invention propose que sur les coquilles 18A, 18B, soit fixé un moyen 59 de stockage permanent de données comportant, pour chaque paramètre, des valeurs compatibles avec ledit moule. L'invention permet ainsi de réduire le choix des valeurs disponibles de la recette dans la limite de ce que les moules effectivement installés sur la station de formage sont capables de réaliser.

Parmi les paramètres dont les valeurs compatibles sont stockées, on trouve par exemple et de manière non limitative :
- le volume en litre du récipient final ;
- la hauteur en millimètres du récipient final ;
- le diamètre maximal du récipient final ;
- le procédé de formage susceptible d'être mis en œuvre par le moule 16, qui prend par exemple la valeur "1" pour un procédé simple, "2" pour un procédé HR, "3" pour un procédé à fond boxé, etc. ;
- la pression maximale de soufflage en bar.

Ainsi, préalablement à l'étape de programmation manuelle, et préalablement à la mise en production de la station de formage avec de nouveaux moules, le procédé de programmation de l'unité 56 électronique de commande comporte une étape de lecture des valeurs stockées dans le moyen 59 de stockage par un lecteur 60 qui transmet automatiquement lesdites valeurs à l'unité 56 électronique de commande pour limiter le choix de valeurs de chaque paramètre aux valeurs compatibles. Ainsi, lors de l'étape de programmation manuelle, les valeurs non compatibles ne pourront pas être sélectionnées par l'opérateur.

De manière générale, le moyen 59 de stockage est formé par un élément physique multidimensionnel qui est porté par le moule 16 et qui est susceptible d'être lu par un lecteur 60 optique. Il s'agit par exemple d'un élément graphique à une ou deux dimensions, ou encore d'une pièce en trois dimensions dont la forme est susceptible d'être reconnue par le lecteur 60 optique. Dans ce dernier cas, la pièce est susceptible d'être formée par l'une des coquilles 18A, 18B.

Dans les exemples représentés aux figures, le moyen 59 de stockage est un code 62 barre bidimensionnel qui est porté par au moins une coquille 18A, 18B du moule 16. Le lecteur 60 est alors formé par un lecteur optique, telle qu'une caméra qui transmet l'image du code 62 barre bidimensionnel à l'unité 56 électronique de commande, cette dernière étant équipée de moyens logiciels aptes à décrypter le code 62 barre bidimensionnel.

Dans le mode de réalisation représenté aux figures 2 à 4, le code 62 barre bidimensionnel est ici agencé sur l'une des coquilles 18B. Le code 62 barre bidimensionnel est agencé sur la partie 47 visible de la coquille 18B qui est destinée à dépasser du porte-coquille 20B.

Dans l'exemple représenté aux figures, cette zone est ici formée par la face 36 annulaire verticale du rebord 34. Cet emplacement conjugue le premier avantage d'être toujours visible à lorsque la coquille 18B est montée dans le porte-coquille 20B et le deuxième avantage d'être sur une face qui n'est pas exposée aux frottements contrairement à la face 26 supérieure. Cette solution est donc particulièrement avantageuse lorsque le code 62 barre bidimensionnel est susceptible d'être usée.

C'est notamment le cas du code 62 barre bidimensionnel qui est ici imprimé sur une étiquette qui est collée sur la coquille 18B. L'étiquette est réalisée en un matériau résistant par exemple en un matériau plastique épais muni d'un revêtement transparent de protection. Elle est collée de manière permanente sur la coquille 18B. Ainsi, le code 62 barre bidimensionnel reste avantageusement collé à la coquille 18B pendant toute sa durée de vie.

En variante non représentée de l'invention, le code barre bidimensionnel est réalisé par altération de la surface de la coquille. Par exemple, le code barre bidimensionnel est gravé sur la surface de la coquille. Dans ce cas, le code barre bidimensionnel est peu sujet à l'usure et il est possible de l'agencer sur la face 26 supérieure de la coquille. On a constaté que cette disposition du code barre bidimensionnel sur la face 26 supérieure de la coquille permet une meilleure lecture par le lecteur 60. Ceci s'explique notamment par le fait que le lecteur est agencé au-dessus mais avec un décalage transversal par rapport au code barre bidimensionnel. Cet agencement du lecteur permet d'éviter que des reflets sur le code barre bidimensionnel ne viennent interférer avec sa lecture.

Le code barre bidimensionnel est avantageusement un code de type "DataMatrix". Il s'agit par exemple d'un code qui est régit par la norme "ECC200" de l'année 2008 gérée par l'organisme "GS1". On se reportera à la norme associée de l'organisme GS1 pour plus de détails.

Comme cela est illustré à la figure 5, un tel code 62 se présente sous la forme d'une matrice carrée de pixels noirs et blancs. Les pixels formant le bord 64 gauche et le bord 66 inférieur de la matrice sont tous noirs de manière à tracer deux lignes noires continues formant un "L". Les pixels formant le bord 68 supérieur et le bord 70 droit de la matrice sont en alternance blanc et noir de manière à tracer deux lignes en traits interrompus.

L'avantage du code 62 DataMatrix est que la matrice carrée peut être divisée horizontalement en deux demi-carrés qui sont ensuite juxtaposés transversalement pour former un code bidimensionnel de forme rectangulaire, comme cela est indiqué à la figure 6. Dans ce cas, les deux moitiés de matrice sont séparées par une ligne 72 noire continue verticale intercalaire. Cette forme rectangulaire est particulièrement intéressante pour permettre d'agencer le code 62 barre bidimensionnel sur une face aussi étroite que la face 36 annulaire du rebord 34.

Avantageusement, le lecteur 60 est agencé sur la station 10 de formage pour pouvoir lire le code 62 barre bidimensionnel après montage des coquilles 18A, 18B dans leur porte-coquille 20A, 20B. Ainsi, les valeurs stockées sont lues par le lecteur 60 lorsque le moule 16 est installé, c'est-à-dire prêt à former des récipients, sur la station 10 de formage.

Dans le mode de réalisation représenté aux figures 1 et 2, le lecteur 60 est monté fixe par rapport au sol de manière à pouvoir prendre une image du code 62 barre bidimensionnel de chaque moule 16 à la volée lors de la rotation du carrousel 12.

En variante non représentée de l'invention, chaque unité 14 de moulage est équipée d'un lecteur 60 individuel qui est embarqué sur le carrousel 12. Ainsi, il y a autant de lecteurs 60 que d'unités 14 de moulage.

Selon une autre variante de l'invention, le lecteur 60 est agencé pour lire le code 62 barre bidimensionnel avant le montage des coquilles 18A, 18B sur leur porte-coquille 20A, 20B. Il s'agit par exemple d'un lecteur 60 manuel qui est manipulé par un opérateur.

L'invention permet ainsi de limiter les erreurs humaines lors de la programment de l'unité 56 électronique de commande en limitant le choix de chaque paramètre déterminé à des valeurs compatibles avec le type de moule 16 installé sur la station 10 de formage.

En outre, en lisant les codes 62 barre bidimensionnel de chaque moule 16, l'unité 56 électronique de commande peut détecter instantanément si tous les moules 16 installés sur la station 10 de soufflage sont du même types. Cela permet ainsi de détecter si un moule 16 d'un type différents des autres est installé sur la station 10 de formage.

Par ailleurs, il peut arriver qu'un code 62 barre bidimensionnel porté par un moule 16 ne soit pas lisible. En ce cas, l'unité 56 électronique de commande peut être programmée de manière à considérer que ce moule 16 est du même type que les autres moules 16 installés sur la station 10 de formage.

## Revendications

1. Procédé d'assistance à la programmation d'une unité (56) électronique de commande d'une station (10) de formage,
la station (10) de formage comportant des unités (14) de moulage dont chacune porte un moule (16) interchangeable pour réaliser des récipients, notamment pour des bouteilles en matériau thermoplastique, par soufflage de préformes,
le procédé comportant une étape de programmation manuelle consistant à sélectionner une valeur pour des paramètres déterminés de fonctionnement par l'intermédiaire d'une interface (58) de saisie de données dans l'unité (56) électronique de commande,
**caractérisé en ce que** sur chaque moule (16) est fixé un moyen (59) de stockage permanent de données comportant des valeurs compatibles avec ledit moule (16) pour chaque paramètre déterminé, le procédé comportant une étape préalable de lecture des valeurs stockées dans le moyen (59) de stockage par un lecteur (60) qui transmet automatiquement lesdites valeurs à l'unité (56) électronique de commande pour limiter le choix de valeurs de chaque paramètre aux valeurs compatibles.

2. Procédé selon la revendication précédente, **caractérisé en ce que** le moyen (59) de stockage est un élément physique multidimensionnel qui est porté par le moule (16) et qui est susceptible d'être lu par un lecteur (60) optique.

3. Procédé selon la revendication précédente, **caractérisé en ce que** le moyen (59) de stockage est un code-barres (62) bidimensionnel qui est porté par le moule (16) et qui est susceptible d'être lu par un lecteur (60) optique.

4. Procédé selon la revendication précédente, **caractérisé en ce que** le moyen (59) de stockage est un code (62) conforme à la norme "GS1 DataMatrix ECC200".

5. Procédé selon l'une quelconque des revendications précédentes, **caractérisé en ce que** le lecteur (60) est agencé sur la station (10) de formage.

6. Procédé selon l'une quelconque des revendications précédentes, **caractérisé en ce que** les valeurs stockées sont lues par le lecteur (60) lorsque le moule est installé sur la station (10) de formage.

## Patentansprüche

1. Verfahren zur Unterstützung der Programmierung einer elektronischen Steuereinheit (56) einer Formungsstation (10),
wobei die Formungsstation (10) Formgebungseinheiten (14) aufweist, von denen jede eine austauschbare Form (16) zur Herstellung von Behältern, insbesondere für Flaschen aus thermoplastischem Werkstoff, durch Blasen von Vorformlingen trägt,
wobei das Verfahren einen Schritt der manuellen Programmierung aufweist, der darin besteht, über eine Schnittstelle (58) zur Dateneingabe in die elektronische Steuereinheit (56) einen Wert für bestimmte Betriebsparameter auszuwählen,
**dadurch gekennzeichnet, dass** an jeder Form (16) eine Einrichtung (59) zur permanenten Datenspeicherung befestigt ist, die für jeden Parameter mit der Form (16) kompatible Werte aufweist, wobei das Verfahren einen vorhergehenden Schritt des Lesens der in der Speichereinrichtung (59) gespeicherten Werte durch ein Lesegerät (60) aufweist, das die Werte automatisch an die elektronische Steuereinheit (56) überträgt, um die Wahl von Werten jedes Parameters auf die kompatiblen Werte zu begrenzen.

2. Verfahren nach dem vorhergehenden Anspruch, **dadurch gekennzeichnet, dass** die Speichereinrichtung (59) ein mehrdimensionales physisches Element ist, das von der Form (16) getragen wird und das von einem optischen Lesegerät (60) gelesen werden kann.

3. Verfahren nach dem vorhergehenden Anspruch, **dadurch gekennzeichnet, dass** die Speichereinrichtung (59) ein zweidimensionaler Barcode (62) ist, der von der Form (16) getragen wird und der von einem optischen Lesegerät (60) gelesen werden kann.

4. Verfahren nach dem vorhergehenden Anspruch, **dadurch gekennzeichnet, dass** die Speichereinrichtung (59) ein Code (62) gemäß der Norm "GS1 DataMatrix ECC200" ist.

5. Verfahren nach einem der vorhergehenden Ansprüche, **dadurch gekennzeichnet, dass** das Lesegerät (60) auf der Formungsstation (10) angeordnet ist.

6. Verfahren nach einem der vorhergehenden Ansprüche, **dadurch gekennzeichnet, dass** die gespeicherten Werte vom Lesegerät (60) gelesen werden, wenn die Form auf der Formungsstation (10) installiert ist.

## Claims

1. Method for assisting with the programming of an electronic control unit (56) for controlling a forming station (10),
the forming station (10) comprising moulding units (14) each of which bears one interchangeable mould (16) for producing containers, especially thermoplastic bottles, by blow moulding preforms,
the method comprising a step of manual programming consisting in selecting a value for determined operating parameters via an interface (58) for inputting data into the electronic control unit (56),
**characterized in that** to each mould (16) is fastened a storage means (59) for permanently storing data comprising values compatible with said mould (16) for each determined parameter, the method comprising a prior step of reading values stored in the storage means (59) with a reader (60) that automatically transmits said values to the electronic control unit (56) in order to limit the choice of values of each parameter to the compatible values.

2. Method according to the preceding claim, **characterized in that** the storage means (59) is a multidimensional physical element that is borne by the mould (16) and that is capable of being read by an optical reader (60).

3. Method according to the preceding claim, **characterized in that** the storage means (59) is a two-dimensional barcode (62) that is borne by the mould (16) and that is capable of being read by an optical reader (60) .

4. Method according to the preceding claim, **characterized in that** the storage means (59) is a code (62) according to the standard "GS1 DataMatrix ECC200".

5. Method according to any one of the preceding claims, **characterized in that** the reader (60) is arranged on the forming station (10).

6. Method according to any one of the preceding claims, **characterized in that** the stored values are read by the reader (60) when the mould is installed in the forming station (10).
